# FASCICULE DE BREVET EUROPEEN

(11) **EP 2 152 558 B1**
(45) Date de publication et mention de la délivrance du brevet: **31.08.2011**
(21) Numéro de dépôt: 08788189.2
(22) Date de dépôt: 16.04.2008
(51) Int. Cl.: B60W 50/08, B60K 31/00, B60W 30/14

(54) **PROCEDE ET DISPOSITIF D 'ALERTE DE LA PROXIMITE D'UNE ZONE DE PEAGE**
VERFAHREN UND VORRICHTUNG ZUR WARNUNG VOR DER NÄHE ZU EINEM ZAHLUNGSBEREICH
METHOD AND DEVICE FOR WARNING OF PROXIMITY TO A PAY ZONE

(30) Priorité: 17.04.2007 FR 0702771
(43) Date de publication de la demande: 17.02.2010
(73) Titulaire: Renault S.A.S., 92100 Boulogne-Billancourt (FR)
(72) Inventeur: SACLIER, Nils, F-78490 Grosrouvre (FR); FREY, Nicolas, F-91940 Gometz Le Chatel (FR)
(86) Numéro de dépôt international: PCT/FR2008/050676
(87) Numéro de publication internationale: WO 2008/142343

(56) Documents cités:
- EP-A- 1 302 356
- DE-A1- 10 225 782
- FR-A- 2 777 515
- US-A1- 2003 139 882

## Description

La présente invention est relative à un procédé et à un dispositif pour alerter le conducteur d'un véhicule équipé d'un système de navigation embarqué, de la proximité d'une zone de péage.

A l'heure actuelle, de très nombreux véhicules sont équipés de systèmes de navigation qui remplissent deux fonctions principales.

La première est une fonction de routage qui consiste à calculer un itinéraire idéal pour rejoindre une position géographique de destination à partir d'une position géographique de départ.

La deuxième est une fonction de guidage qui consiste à proposer au conducteur du véhicule des indications de guidage, en particulier à chaque intersection de routes en fonction de l'itinéraire idéal qui a été calculé.

Un tel système de navigation prend en compte, notamment, la position géographique réelle du véhicule, qui est en général donnée par un dispositif de radiolocalisation par satellite du type "GPS" (de l'anglais "*Global Positioning System*" qui signifie "Système Global de Positionnement").

Un tel système de navigation contribue à améliorer la sécurité et le confort du conducteur du véhicule.

Parallèlement, de plus en plus de véhicules sont par ailleurs équipés d'un régulateur de vitesse qui, lui aussi, apporte une amélioration de confort et de sécurité pour le conducteur.

Chacun sait que les autoroutes constituent des axes de circulation relativement bien sécurisés sur lesquels le nombre d'accidents est peu élevé comparativement aux autres axes routiers de moindre importance.

Cependant, les déplacements sur les autoroutes sont relativement "monotones", de sorte que la vigilance du conducteur peut se relâcher quand de grandes distances sont à parcourir.

Les zones de péage constituent, au sein des autoroutes, des endroits qui sont particulièrement accidentogènes, puisque les véhicules qui s'en approchent doivent réduire de manière importante leur vitesse sur une distance relativement courte.

Dans la plupart des cas, les premiers panneaux qui signalent la proximité d'une zone de péage sont disposés à 2 000 voire 2 500 mètres de celle-ci.

EP-A-1 302 356 divulgue un procédé selon le préambule de la revendication 1.

La signalétique qui est employée pour ce faire et afficher les limitations de vitesse correspondantes est la plupart du temps suffisante pour que les conducteurs se concentrent à l'abord de la zone de péage et, en cas de besoin, régulent ou réduisent leur vitesse pour s'adapter aux limitations en vigueur et aux conditions de circulation.

Mais ceci n'est pas toujours le cas et la situation est encore plus gênante quand la signalétique existante sur les bas-côtés de l'autoroute n'est pas bien visible, en particulier en cas de mauvais temps ou de trafic important.

La présente invention a pour but de résoudre ce problème en proposant un procédé qui permet d'alerter le conducteur d'un véhicule équipé d'un système de navigation embarqué, de la proximité d'une zone de péage.

Ce procédé fait usage d'une base de données cartographiques associée au système de navigation, qui est apte à afficher sur une interface de visualisation le positionnement de ladite zone par rapport au véhicule.

L'invention prévoit un procédé selon la revendication 1. Ce procédé consiste notamment à :
a) détecter la position dudit véhicule par rapport à ladite zone et calculer la distance qui les sépare ;
b) comparer cette distance mesurée à une distance de référence ;
c) dès lors que la distance mesurée est inférieure ou égale à ladite distance de référence, délivrer au conducteur, via ledit système de navigation embarqué, un message d'alerte relatif à la proximité d'une zone de péage, on délivre un message d'alerte comprenant une invitation à déconnecter un régulateur de vitesse.

Selon d'autres caractéristiques avantageuses de ce procédé :
- on délivre un message d'alerte visuel et/ou sonore ;
- ledit message est visuel, on l'affiche via ladite interface de visualisation ;
- on délivre un message comportant une invitation à adapter la vitesse du véhicule ;
- ledit véhicule étant équipé d'un régulateur de vitesse, il comprend une étape de détection d'un état préalable de régulation ou de la non régulation dudit régulateur et, dans l'hypothèse où l'état de régulation est détecté, d'inhibition de cet état.
- ladite étape est mise en oeuvre dès lors qu'une distance dite de "sécurité" entre ledit véhicule et la zone de péage est détectée ;
- ledit véhicule étant équipé d'un régulateur de vitesse, il comprend une étape de régulation de la vitesse dudit véhicule.

L'invention se rapporte également à un dispositif pour la mise en oeuvre du procédé selon l'une des caractéristiques précédentes.

Selon un premier aspect, ce dispositif comporte une interface graphique de visualisation et/ou une interface vocale.

Dans un mode de réalisation préféré, dans lequel le véhicule est équipé d'un régulateur de vitesse, ce dispositif comprend une interface de contrôle entre le système de navigation et un calculateur gérant le fonctionnement du régulateur de vitesse.

D'autres caractéristiques et avantages de l'invention apparaîtront à la lecture de la description détaillée d'un mode de réalisation préférentielle.

Cette description sera faite en référence aux dessins annexés, dans lesquels :
- la figure 1 est un schéma montrant un véhicule se déplaçant sur une autoroute en direction d'une zone de péage ;
- la figure 2 est un schéma d'un dispositif pour la mise en oeuvre du procédé selon l'invention.

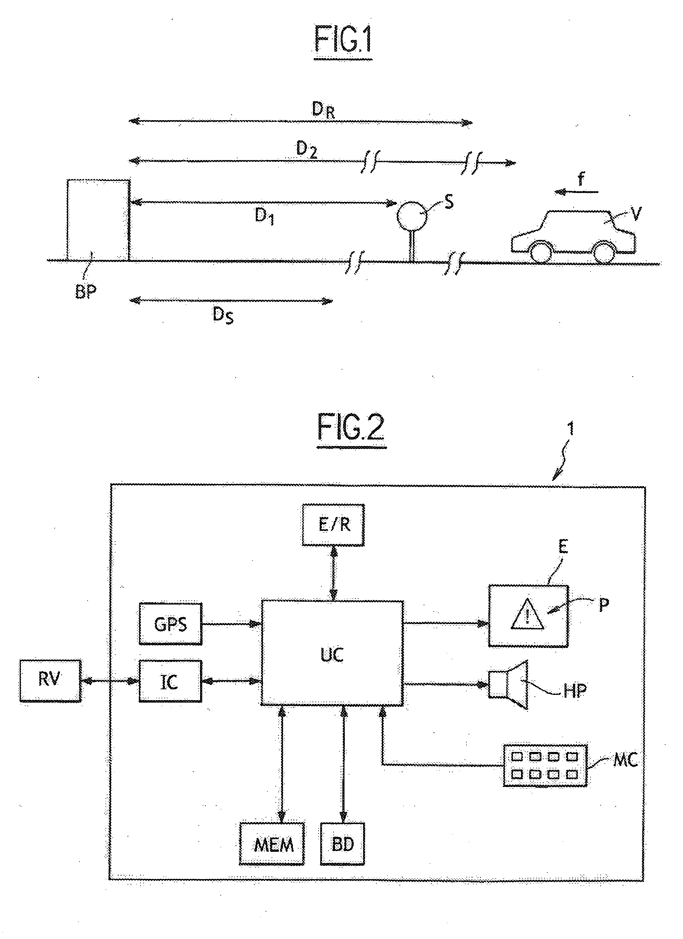

A la figure 1 est représenté un véhicule **V** équipé du dispositif selon l'invention, qui se déplace dans le sens de la flèche **f,** sur une autoroute, en direction d'une zone ou barrière de péage **BP.**

Sur cette figure, la distance **D₁** est celle qui sépare la barrière de péage **BP** du premier panneau de signalisation S qui annonce sa présence.

La distance **D₂** est la distance qui sépare au temps **t,** le véhicule **V** de la barrière de péage **BP.** Dans le cas représenté ici, cette distance est supérieure à **D₁.**

La distance **D_{R}** est considérée comme une distance de référence sur laquelle on reviendra plus loin. Toutefois, cette distance **D_{R}** est comprise, sur la figure annexée, entre **D₁** et **D₂.**

Enfin, la distance **D_{S}** est dite "distance de sécurité" et est bien inférieure à la distance précitée **D₁.** On expliquera plus loin dans la description, comment et pourquoi cette distance est prise en compte.

En référence à la figure 2, on a représenté très schématiquement un dispositif pour la mise en oeuvre du procédé selon l'invention.

Ce dispositif comporte une unité de calcul **UC,** ainsi qu'une base de données cartographiques **BD** formant moyen de routage.

Ces moyens font partie d'un système de navigation embarqué 1 et sont montés à bord du véhicule **V.**

La base **BD** est par exemple stockée sur un disque numérique de type CD-Rom. Le système embarqué comprend des moyens de lecture adaptés tel qu'un lecteur optique non représenté, en vue d'accéder aux données de la base **BD.**

Le système 1 comporte de plus un module GPS de localisation tel qu'un système de radiolocalisation par satellites (de type "*Global Positioning System").*

Le dispositif comprend par ailleurs un moyen de mémorisation **MEM,** constitué par exemple d'une mémoire réinscriptible qui a pour fonction de servir de stockage d'un ou plusieurs itinéraires, voire de données associées.

Le dispositif comprend par ailleurs un module de commande **MC** qui sert d'interface de commande avec le conducteur du véhicule. Il est par exemple constitué des touches en face avant d'un boîtier ou sur le tableau de bord du véhicule, ou tout simplement par un clavier alphanumérique ou tout autre dispositif analogue.

Le système comprend également un module **E** de restitution d'informations visuelles, constitué de préférence par un écran.

Dans le cas où cet écran est tactile, alors le module de commande **MC** peut faire partie intégrante dudit écran.

Un module de restitution d'informations sonores **HP,** tel qu'un module de synthèse de parole, est également prévu.

Le dispositif comporte par ailleurs un module **E/R** d'émission/réception qui permet une transmission bidirectionnelle de données à partir ou à destination du système embarqué monté à bord du véhicule.

Par ailleurs, le dispositif de l'invention communique, via les moyens **E/R** avec un centre de gestion non représenté, situé à l'extérieur du véhicule, apte à générer une désignation d'une position géographique utilisable par les moyens de routage du véhicule.

Dans une forme de réalisation préférentielle, le dispositif 1 est relié au calculateur d'un régulateur de vitesse **RV,** via une interface de contrôle **IC.**

Dans une première étape du procédé de l'invention, le dispositif détecte la position du véhicule **V** par rapport à la zone de péage **BP** et calcule la distance **D₂** qui les sépare. Ce calcul se fait de manière traditionnelle, à savoir à partir des données qui sont habituellement utilisées pour localiser le véhicule par rapport à son point final de destination.

Une deuxième étape consiste à comparer cette distance mesurée **D₂** à une distance de référence **D_{R}.** Cette distance de référence est choisie à l'avance et déterminée une bonne fois pour toutes. Elle est par exemple supérieure à la distance **D₁** qui sépare le premier panneau de signalisation **S** de la barrière de péage.

Dans la pratique, il est courant que la distance **D₁** soit de 2 000 mètres. Par convention, on décidera par exemple que la distance **D_{R}** est de 2 500 mètres. Cela permettra de délivrer un message d'alerte bien avant que le conducteur ne visualise le premier panneau **S.**

Dans une troisième étape, dès que la distance mesurée **D₂** est inférieure ou égale à la distance de référence **D_{R},** le dispositif 1 délivre au conducteur du véhicule **V,** via le système de navigation embarqué, un message d'alerte relatif à la proximité de la zone de péage **BP.**

Ce message d'alerte est visuel et/ou sonore.

Quand il est visuel, on l'affiche via ladite interface de visualisation **E.** Cette visualisation se fait de préférence par l'apparition d'un sigle ou d'une fenêtre **P** spécifique sur l'écran.

Il peut être constitué d'une succession de mots constituant un message lisible, d'un pictogramme, ou d'une association des deux.

Ledit message comporte au moins une information relative à la proximité de la zone de péage **BP** et, de préférence, une invitation à adapter la vitesse du véhicule.

Ainsi, par exemple, le message visuel et/ou sonore diffusé peut être: "Attention, barrière de péage à proximité, veuillez adapter votre vitesse".

Quand le véhicule **V** est équipé d'un régulateur de vitesse, on délivre de préférence un message d'alerte comprenant une invitation à déconnecter ce régulateur **RV.** Dans ce cas, ce message peut être le suivant : "Attention, barrière de péage à proximité, veuillez déconnecter votre régulateur de vitesse".

Selon un mode de réalisation spécifique, le procédé comprend une étape de détection, via l'unité de calcul **UC,** et l'interface **IC** d'un état préalable de régulation ou de non régulation de ce régulateur **RV,** et dans l'hypothèse où l'état de régulation est détecté, d'inhibition de cet état.

Cette étape permet ainsi de s'assurer que le véhicule va s'approcher de la barrière de péage alors que le régulateur est déconnecté et que le conducteur a la parfaite maîtrise de son véhicule.

De préférence, l'étape qui vient d'être décrite est mise en oeuvre dès lors qu'une distance de sécurité **D_{S},** déjà citée en référence à la figure 1, est détectée entre le véhicule **V** et la zone de péage **BP.**

De préférence, cette distance **D_{S}** est de l'ordre de quelques centaines de mètres. Elle est, en tout état de cause, inférieure à **D₁.**

Enfin, selon un mode de réalisation spécifique, le procédé comprend une étape de régulation de la vitesse du véhicule, de manière à éviter toute survitesse dans la phase initiale d'approche de la barrière de péage.

Chacune des fonctions qui viennent d'être décrites peut être proposée indépendamment ou simultanément au conducteur.

Le procédé, pour sa bonne mise en oeuvre, nécessite :
- des données cartographiques disponibles et à jour ;
- une bonne localisation du véhicule par le système de navigation ;
- une interface de contrôle entre le système de navigation et le (ou les) calculateur(s) gérant la fonction de régulation de vitesse ;
- une interface graphique sur l'écran de navigation et/ou vocale via la synthèse de la parole du système de navigation.

## Revendications

1. Procédé pour alerter le conducteur d'un véhicule (V) équipé d'un système de navigation embarqué (1), d'un régulateur de vitesse (RV), de la proximité d'une zone de péage (BP), selon lequel une base de données cartographiques (BD) associée au dit système est apte à afficher sur une interface de visualisation (E) le positionnement de ladite zone (BP) par rapport au véhicule (V), comportant les étapes:
a) détecter la position dudit véhicule (V) par rapport à ladite zone (BP) et calculer la distance (D₂) qui les sépare ;
b) comparer cette distance mesurée (D₂) à une distance de référence (D_{R}) ;
c) dès lors que la distance mesurée (D₂) est inférieure ou égale à ladite distance de référence (D_{R}), délivrer au conducteur, via ledit système de navigation embarqué (1), un message d'alerte relatif à la proximité d'une zone de péage (BP) ;
**caractérisé par le fait qu'**on délivre un message d'alerte comprenant une invitation à déconnecter ledit régulateur (RV).

2. Procédé selon la revendication 1, **caractérisé par le fait qu'**on délivre un message d'alerte visuel et/ou sonore.

3. Procédé selon la revendication 2 dans lequel ledit message est visuel, **caractérisé par le fait qu'**on l'affiche via ladite interface de visualisation (E).

4. Procédé selon l'une des revendications précédentes, **caractérisé par le fait qu'**on délivre un message comportant une invitation à adapter la vitesse du véhicule (V).

5. Procédé selon l'une des revendications précédentes, ledit véhicule (V) étant équipé d'un régulateur de vitesse (RV), **caractérisé par le fait qu'**il comprend une étape de détection d'un état préalable de régulation ou de la non régulation dudit régulateur (RV) et, dans l'hypothèse où l'état de régulation est détecté, d'inhibition de cet état.

6. Procédé selon la revendication 5, **caractérisé par le fait que** ladite étape est mise en oeuvre dès lors qu'une distance dite de "sécurité" (DS) entre ledit véhicule (V) et la zone de péage (BP) est détectée.

7. Procédé selon l'une des revendications précédentes, ledit véhicule étant équipé d'un régulateur de vitesse (RV), **caractérisé par le fait qu'**il comprend une étape de régulation de la vitesse dudit véhicule (V).

8. Dispositif pour la mise en oeuvre du procédé selon l'une des revendications précédentes, comprenant un système de navigation embarqué (1), **caractérisé par le fait qu'**il comporte une interface graphique de visualisation (E) et/ou une interface vocale (HP).

9. Dispositif selon la revendication 8, ledit véhicule étant équipé d'un régulateur de vitesse, **caractérisé par le fait qu'**il comprend une interface de contrôle (IC) entre ledit système de navigation (1) et un calculateur gérant le fonctionnement du régulateur de vitesse (RV).

## Claims

1. Method for warning the driver of a vehicle (V) equipped with an onboard navigation system (1), with a speed regulator (RV), of the proximity of a toll zone (BP), according to which a map database (BD) associated with said system is able to display on a visualization interface (E) the positioning of said zone (BP) relative to the vehicle (V), comprising the following steps:
a) detecting the position of said vehicle (V) relative to said zone (BP) and calculating the distance (D₂) which separates them;
b) comparing this measured distance (D₂) to a reference distance (D_{R});
c) when the measured distance (D₂) is less than or equal to said reference distance (D_{R}), delivering to the driver, via said onboard navigation system (1), a warning message relating to the proximity of a toll zone (BP);
**characterized in that** a warning message is delivered that includes a prompt to disconnect said regulator (RV).

2. Method according to Claim 1, **characterized in that** a visual and/or audible warning message is delivered.

3. Method according to Claim 2, in which said message is visual, **characterized in that** it is displayed via said visualization interface (E).

4. Method according to one of the preceding claims, **characterized in that** a message is delivered which includes a prompt to adapt the speed of the vehicle (V).

5. Method according to one of the preceding claims, said vehicle (V) being equipped with a speed regulator (RV), **characterized in that** it comprises a step for detecting a prior state of regulation or of non-regulation of said regulator (RV) and, assuming that the regulation state is detected, inhibiting this state.

6. Method according to Claim 5, **characterized in that** said step is implemented when a so-called "safety" distance (DS) between said vehicle (V) and the toll zone (BP) is detected.

7. Method according to one of the preceding claims, said vehicle being equipped with a speed regulator (RV), **characterized in that** it comprises a step for regulating the speed of said vehicle (V).

8. Device for implementing the method according to one of the preceding claims, comprising an onboard navigation system (1), **characterized in that** it comprises a graphic visualization interface (E) and/or a voice interface (HP).

9. Method according to Claim 8, said vehicle being equipped with a speed regulator, **characterized in that** it comprises a control interface (IC) between said navigation system (1) and a computer managing the operation of the speed regulator (RV).

## Patentansprüche

1. Verfahren zur Warnung des Fahrers eines Fahrzeugs (V), das mit einem Bordnavigationssystem (1) und einem Tempomat (RV) ausgestattet ist, vor der Nähe zu einem Mautstellenbereich (BP), gemäß dem eine kartographische Datenbank (BD), welche dem System zugeordnet ist, geeignet ist, auf einer Visualisierungsoberfläche (E) die Positionierung des Bereiches (BP) bezüglich des Fahrzeugs (V) anzuzeigen, welches die folgenden Schritte aufweist:
a) Detektieren der Position des Fahrzeugs (V) bezüglich des Bereiches (BP) und Berechnen der Entfernung (D₂), welche sie trennt;
b) Vergleichen dieser gemessenen Entfernung (D₂) mit einer Referenzentfernung (D_{R});
c) sobald die gemessene Entfernung (D₂) kleiner als die oder gleich der Referenzentfernung (D_{R}) ist, Ausgeben einer Warnmeldung, die sich auf die Nähe eines Mautstellenbereiches (BP) bezieht, über das Bordnavigationssystem (1) an den Fahrer;
**dadurch gekennzeichnet, dass** eine Warnmeldung ausgegeben wird, die eine Aufforderung enthält, den Tempomaten (RV) auszuschalten.

2. Verfahren nach Anspruch 1, **dadurch gekennzeichnet, dass** eine optische und/oder akustische Warnmeldung ausgegeben wird.

3. Verfahren nach Anspruch 2, bei dem die Meldung optisch erfolgt, **dadurch gekennzeichnet, dass** sie über die Visualisierungsoberfläche (E) angezeigt wird.

4. Verfahren nach einem der vorhergehenden Ansprüche, **dadurch gekennzeichnet, dass** eine Meldung ausgegeben wird, die eine Aufforderung enthält, die Geschwindigkeit des Fahrzeugs (V) anzupassen.

5. Verfahren nach einem der vorhergehenden Ansprüche, wobei das Fahrzeug (V) mit einem Tempomaten (RV) ausgestattet ist, **dadurch gekennzeichnet, dass** es einen Schritt der Detektion eines vorausgehenden Regelungs- oder Nichtregelungs-Zustands des Tempomaten (RV) und unter der Voraussetzung, dass der Regelungs-Zustand detektiert wird, der Sperrung dieses Zustands aufweist.

6. Verfahren nach Anspruch 5, **dadurch gekennzeichnet, dass** der Schritt durchgeführt wird, sobald eine sogenannte "Sicherheitsentfernung" (DS) zwischen dem Fahrzeug (V) und dem Mautstellenbereich (BP) detektiert wird.

7. Verfahren nach einem der vorhergehenden Ansprüche, wobei das Fahrzeug mit einem Tempomaten (RV) ausgestattet ist, **dadurch gekennzeichnet, dass** es einen Schritt der Regelung der Geschwindigkeit des Fahrzeugs (V) aufweist.

8. Vorrichtung zur Durchführung des Verfahrens nach einem der vorhergehenden Ansprüche, welche ein Bordnavigationssystem (1) aufweist, **dadurch gekennzeichnet, dass** sie eine grafische Visualisierungsoberfläche (E) und/oder eine Sprachschnittstelle (HP) aufweist.

9. Vorrichtung nach Anspruch 8, wobei das Fahrzeug mit einem Tempomaten ausgestattet ist, **dadurch gekennzeichnet, dass** sie mit einer Steuerschnittstelle (IC) zwischen dem Navigationssystem (1) und einem Computer ausgestattet ist, welcher den Betrieb des Tempomaten (RV) steuert.
